(19) **Europäisches Patentamt**

**European Patent Office**

**Office européen des brevets**

(11) **EP 0 706 062 B1**

(12) **FASCICULE DE BREVET EUROPEEN**

(45) Date de publication et mention
de la délivrance du brevet:
**23.05.2001 Bulletin 2001/21**

(51) Int Cl.⁷: $G01S\ 15/04$, G01S 7/539

(21) Numéro de dépôt: **95402092.1**

(22) Date de dépôt: **18.09.1995**

(54) **Equipement de reconnaissance tridimensionnelle de formes**

Gerät zur Erkennung von dreidimensionalen Formen

Equipment for recognizing three-dimensional shapes

(84) Etats contractants désignés:
**DE GB IT**

(30) Priorité: **04.10.1994 FR 9411841**

(43) Date de publication de la demande:
**10.04.1996 Bulletin 1996/15**

(73) Titulaire: **SAGEM SA**
**75116 Paris (FR)**

(72) Inventeur: **Nguyen-Xuan, Phuc**
**B.P. 326, F-75625 Paris Cédex 13 (FR)**

(74) Mandataire: **Bloch, Gérard et al**
**2, square de l'Avenue du Bois**
**75116 Paris (FR)**

(56) Documents cités:
**GB-A- 1 517 602**      **US-A- 4 332 016**
**US-A- 5 201 906**

## Description

Les équipements de reconnaissance de formes voient actuellement leur champ d'application s'étendre à de nombreux domaines, que ce soit le contrôle de la qualité ou le comptage de produits dans une chaîne de fabrication, le comptage d'animaux, le contrôle des objets dans un aéroport ou bien encore le contrôle de l'accès des personnes depuis une zone à accès non contrôlé vers une zone à accès contrôlé, comme les musées ou les réseaux de transport. Pour améliorer la qualité de la reconnaissance, celle-ci est souvent tridimensionnelle.

C'est par exemple le cas des zones d'embarquement dans les aéroports ou des quais des stations des réseaux urbains de transport en commun, pour lesquels est exercé en entrée un contrôle des titres de transport. Ce contrôle tend, pour en diminuer le coût en personnel, à être exercé par des équipements automatiques comportant un lecteur du titre de transport, qui commande un portillon.

Cependant, cette absence de contrôle humain permet la fraude, deux personnes pouvant, par exemple, tenter de franchir simultanément le portillon avec un seul ticket.

Le problème que s'est posé la demanderesse, sans que cela ne doive cependant limiter la portée de la présente demande, était de détecter de telles tentatives de fraude.

On a déjà proposé d'installer une caméra de surveillance et d'effectuer une reconnaissance tridimensionnelle de forme pour détecter la présence de deux personnes au niveau du portillon. Cependant, un tel système est très coûteux en matériel et, en particulier, nécessite une puissance de traitement élevée pour le signal vidéo, si l'on veut assurer un fonctionnement suffisamment rapide.

On a aussi proposé, en robotique, d'utiliser un émetteur-récepteur à ultrasons et de lui faire balayer l'espace occupé par un objet et déterminer sa forme tridimensionnelle d'après la succession d'échos. Cela nécessite cependant un mécanisme d'entraînement qui, outre son coût d'installation et d'entretien, limite la vitesse de reconnaissance des objets.

US-A-4 332 016 enseigne un système de reconnaissance tridimensionnelle de formes comportant un rideau d'émetteurs - récepteurs ultrasonores permettant de déterminer la forme de sections d'objets identiques défilant à vitesse régulière. L'association de telles formes 2D relatives à d'autres sections d'un objet, obtenues lors de l'avance de celui-ci, permet d'en estimer la forme 3D, qui est comparée à une image en bibliothèque.

US-A-5 201 906 enseigne une porte-sas rotative à compartiments associée à un rideau de transducteurs ultrasonores fixes, avec un seuil bas de hauteur de détection des moyens de reconnaissance de formes prédéterminées pour bloquer la porte et un lecteur de badge commandant la rotation de la porte.

Ces documents enseignent essentiellement de détecter la forme des surfaces parallèles au plan d'onde, ce qui est insuffisant pour déterminer une forme 3D quelconque.

La présente invention propose un équipement de reconnaissance tridimensionnelle de formes qui ne présente pas les inconvénients ci-dessus.

A cet effet, l'invention concerne un équipement de reconnaissance tridimensionnelle de forme, comportant des moyens d'émission d'ultrasons, pour émettre des ondes dans un volume de contrôle dans lequel se trouvent les formes, des moyens de réception d'ultrasons pour en recevoir des échos renvoyés par les formes et des moyens de traitement des échos pour en déterminer les formes à reconnaître, les moyens de réception comportant une pluralité de récepteurs élémentaires présentant des lobes de réception élémentaires s'étendant selon une distribution prédéterminée dans le volume de contrôle et la détermination des formes à reconnaître par lesdits moyens de traitement s'effectuant par association des lobes de réception, et des instants de réception des échos qu'ils reçoivent, pour former des couples [lobe-écho], et par comparaison de ces couples, équipement caractérisé par le fait que les moyens d'émission sont agencés pour émettre des impulsions de durée déterminée et les moyens de traitement sont agencés pour mesurer les durées des échos reçus par les moyens de réception, en calculer un taux d'élargissement des échos par rapport aux impulsions émises et en déterminer une forme tridimensionnelle à reconnaître.

La forme est ainsi explorée, et reconnue, en trois dimensions.

L'invention sera mieux comprise à l'aide de la description suivante de la forme de réalisation préférée de l'équipement de reconnaissance tridimensionnelle de formes de l'invention, en référence au dessin annexé, sur lequel :

-   la figure 1 est une vue de dessus, schématique, de l'équipement de l'invention;
-   la figure 2 est une vue de face de l'équipement de la figure 1;

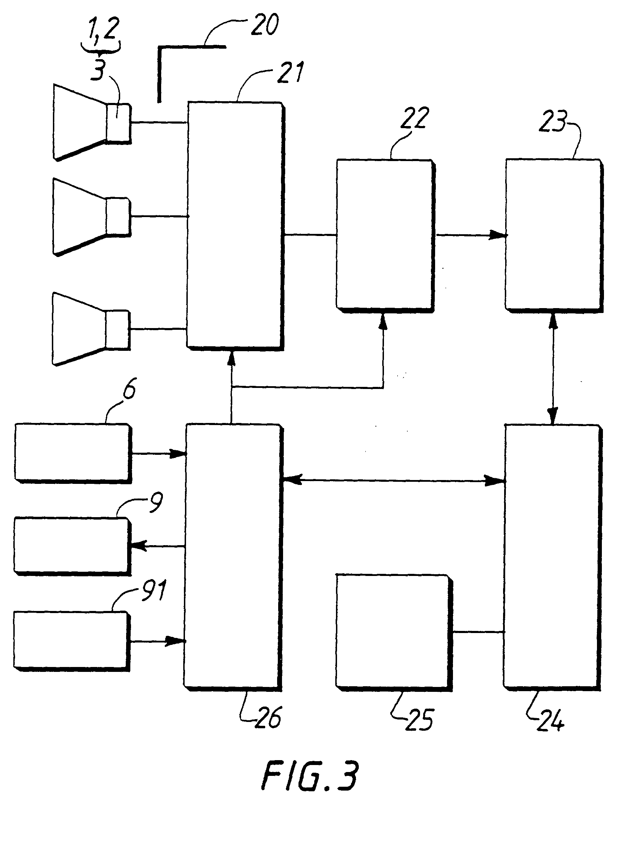

-   la figure 3 est un bloc diagramme de l'équipement;
-   la figure 4, composée des figures 4A et 4B, est un diagramme de temps illustrant le séquencement des émissions d'ultrasons;
-   les figures 5 et 6 illustrent deux cas d'échos variables dans le temps et
-   les figures 7 à 10 illustrent schématiquement des formes reconnues.

L'équipement de reconnaissance tridimensionnelle sert ici à reconnaître la forme d'usagers voulant accéder aux quais d'un réseau de transport souterrain.

L'équipement comporte une pluralité d'émetteurs d'ultrasons 1 et une pluralité de récepteurs d'ultrasons 2, chaque émetteur 1 étant ici associé à un récepteur 2 pour former une cellule à ultrasons 3, dont seulement quelques unes sont représentées. La cellule 3 peut ne comporter qu'un composant, commun à l'émission et à la réception, fonctionnant alternativement dans l'un et l'autre de ces deux modes.

Les lobes d'émission 11 des émetteurs 1 et les lobes de réception 12 des récepteurs 2, qui sont ici confondus, sont de section sensiblement elliptique et présentent une ouverture angulaire limitée.

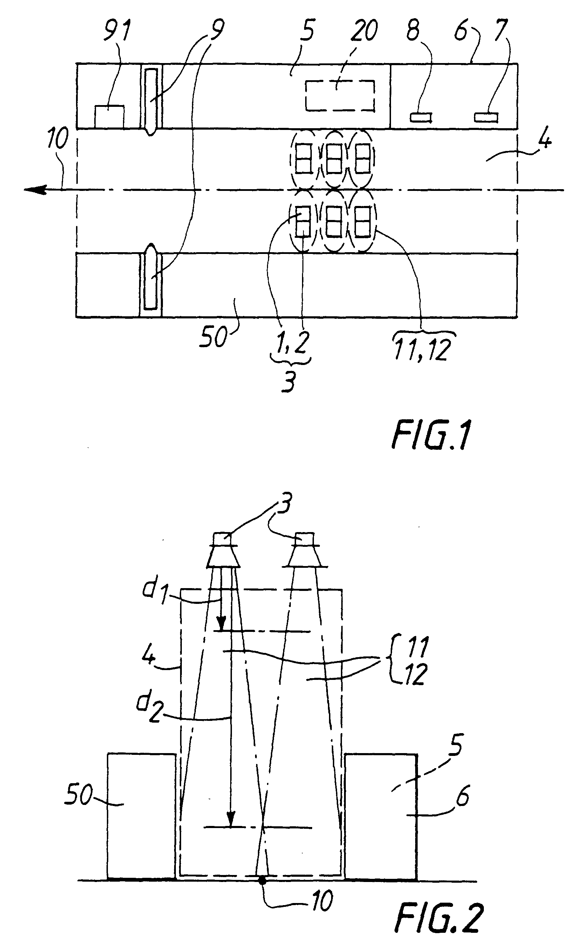

Les lobes 11, 12 s'étendent dans un volume de contrôle 4, limité, sur les figures 1 et 2, par des lignes en pointillé, destiné au passage des usagers, d'environ 0,5 mètre de large et 1,5 mètre de long. Pour la clarté des figures, la largeur de l'équipement a été dilatée par rapport à sa longueur et sa hauteur, respectivement.

La distribution des lobes 11, 12 dans le volume 4 est déterminée par les positions des cellules 3 et par leur orientation.

Un ensemble électronique de traitement 20, logé dans un caisson 5 disposé latéralement en bordure du volume 4, est relié aux cellules 3 pour déterminer la forme de l'usager traversant le volume de contrôle 4.

En regard du caisson 5, un autre caisson 50, appartenant ici à un autre équipement identique, délimite latéralement le volume 4.

Les cellules 3, fixées à un portique non représenté, sont disposées, à intervalles réguliers, dans un plan horizontal situé à environ 2,5 mètres du sol (figure 2) et les paires de lobes 11, 12, sensiblement séparées d'une cellule 3 à l'autre, s'étendent parallèlement vers le sol.

Comme le montrent les figures 1 et 2, les cellules 3 sont ici alignées en deux rangées parallèles à l'axe central 10 de passage des usagers. Chaque lobe 11, 12 s'étend latéralement sur une demi-largeur du volume de contrôle 4, entre l'axe 10 et la paroi du caisson 5 ou 50, pour délimiter des volumes élémentaires sensiblement séparés remplissant quasiment à eux tous le volume de contrôle 4.

La section de chaque lobe 11-12 présente un petit axe, sensiblement parallèle aux rangées de cellules 3, d'environ 10 centimètres à mi-hauteur du volume de contrôle 4. Cela permet d'obtenir une résolution suffisante, selon l'axe 10, entre deux lobes 12 adjacents pour distinguer deux têtes relativement proches.

Un lecteur 6 de tickets de transport, aligné avec le caisson 5, en amont par rapport à la direction de passage 10, comporte un orifice 7 d'introduction de ticket suivi d'un orifice 8 de restitution du ticket. L'accès d'un usager à ces orifices 7, 8 nécessite son entrée dans le volume de contrôle 4.

Un portillon double 9, ici monté coulissant dans la partie aval des caissons 5 et 50 perpendiculairement à la direction de passage 10, est commandé par le lecteur 6 en coopération avec l'ensemble de traitement 20.

L'ensemble de traitement 20 comporte un multiplexeur 21 reliant les cellules 3 à une unité 22 de prétraitement d'échos alimentant une mémoire 23. Un microprocesseur 24 a accès à la mémoire 23 et est relié à des circuits 26 d'interface avec le lecteur 6, le portillon 9 et une barrière opto-électrique 91 disposée en aval du portillon 9, en sortie du volume de contrôle 4. Le microprocesseur 24 peut commander le multiplexeur 21 et l'unité 22 à travers les circuits d'interface 26. Le microprocesseur 24 peut aussi accéder à une mémoire 25 contenant une bibliothèque d'échos-types.

Le fonctionnement de l'équipement va maintenant être expliqué plus en détail.

Pour reconnaître la forme des usagers, l'ensemble de traitement 20 associe les lobes de réception 12 à des instants de réception d'échos de l'usager qu'ils reçoivent, afin de former des couples lobe-écho qui sont ensuite comparés, comme cela est expliqué ci-dessous.

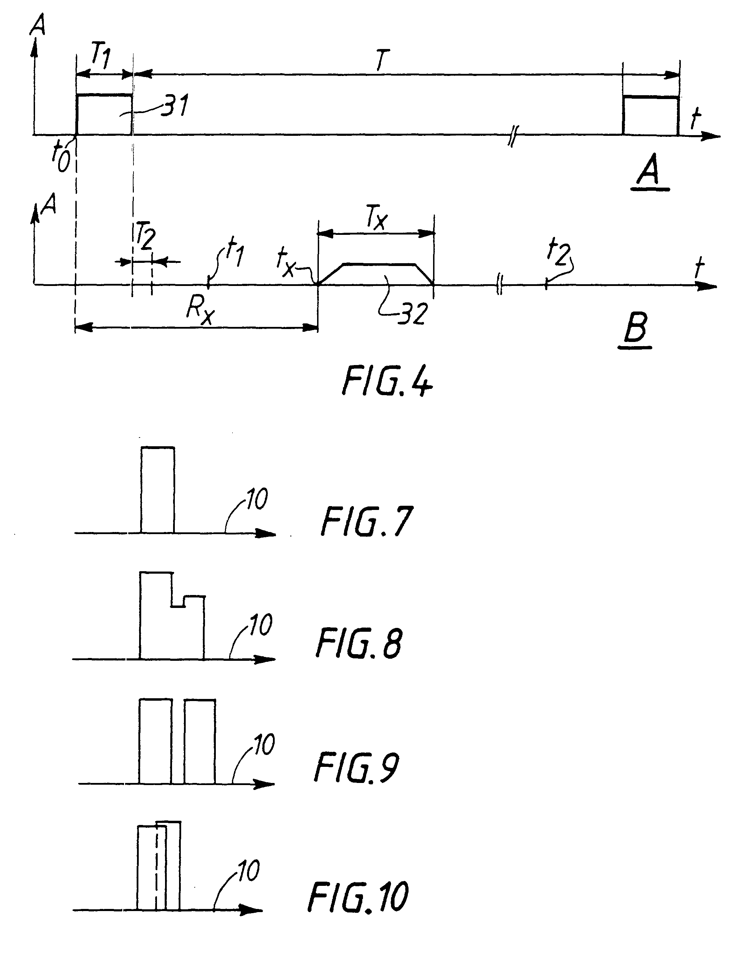

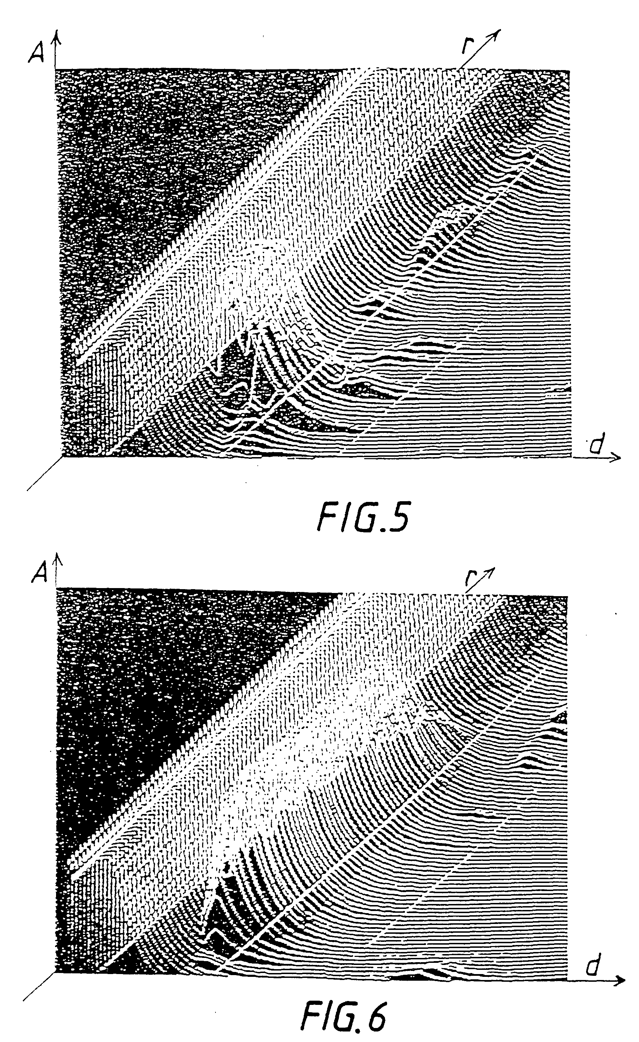

Un usager introduisant son ticket dans l'orifice 7 du lecteur 6 se trouve dans le volume de contrôle 4, ce qui permet à l'ensemble 20 de commencer la reconnaissance de la forme de l'usager. Ce dernier intercepte, de par le volume qu'il occupe, plusieurs lobes d'émission 11 qui fournissent alors des échos dans les lobes 12 des récepteurs 2 associés. Les émissions des émetteurs 1 sont ici simultanées et se produisent cycliquement, avec une période de scrutation T de 20 millisecondes (ms), sous la commande d'une base de temps, non représentée, commandée par le microprocesseur 24. La figure 4 illustre, en fonction du temps $t$, en abscisse, l'émission périodique d'impulsions 31 d'une onde de scrutation ultrasonore à 40 kilohertz (kHz), de durée T1, dont l'amplitude A est portée en ordonnée.

Après un temps de garde T2 destiné à éviter une saturation des récepteurs 2, ces derniers sont activés par la base de temps. Ceux des récepteurs 2 dont le lobe de réception 12 est au moins partiellement situé dans le volume occupé par l'usager reçoivent un écho 32 à partir d'un instant tx et pendant une durée Tx, particuliers. L'instant tx présente, par rapport à l'instant t0 d'émission de l'impulsion 31, un retard

$$Rx = tx - to = 2\ d/v,$$

avec :

2 d : distance aller-retour entre la cellule 3 et la forme, et

v : vitesse du son dans l'air, environ 344 m/s.

Le temps du transit maximal du son pour un aller et retour jusqu'au sol (5 mètres) est d'environ 14,5 ms donc inférieur à la période de scrutation T de 20 ms.

Le multiplexeur 21 échantillonne les réponses des récepteurs 2 à une fréquence de répétition suffisante pour déterminer avec précision la position temporelle de l'impulsion 32 de chacun, ce qui fixe la précision de la distance d. L'unité de prétraitement 22 assure, outre un éventuel filtrage, la mise en forme numérique des échos 32 en fonction du temps, avant de les stocker dans la mémoire 23 sous forme de données appelées primitives instantanées.

Dans le cas où l'écho 32 provient d'une surface du corps de l'usager atteinte en biais par le front de l'onde sonore émise, l'impulsion 32 reçue en écho est composée d'une somme d'échos partiels se recouvrant avec décalage dans le temps. L'impulsion 32, composite, présente alors des fronts avant et arrière inclinés et sa durée Tx est supérieure à la durée T1 de l'impulsion émise 31.

Le microprocesseur 24 a en mémoire des données définissant les positions relatives des diverses cellules 3 et leurs orientations, c'est-à-dire que ces données définissent la distribution des lobes de réception 12, et ici d'émission 11, dans le volume de contrôle 4. Pour la simplicité de l'exposé, on peut ramener chaque lobe de réception 12 à un segment de droite d'orientation connue, limité d'un côté par le récepteur 2 considéré, c'est-à-dire de coordonnées tridimensionnelles connues. La distance $d$, déterminée par le microprocesseur 24 à partir des primitives instantanées lues dans la mémoire 23, fournit alors la position recherchée du point d'intersection de ce segment avec la surface renvoyant l'écho 32. Le taux Tx/T1 d'élargissement de l'impulsion écho 32 permet de déterminer un angle moyen d'inclinaison de la surface atteinte sur le plan, ici horizontal, du front d'onde ultrasonore, donc d'obtenir une information supplémentaire sur la surface scrutée.

L'ensemble des points, en réalité des surfaces, d'intersection est ainsi déterminé à partir des couples lobes de réception 12 et écho associé, qui sont ensuite comparés pour ce qui est de leur emplacement particulier dans le volume de contrôle 4 et du retard de leur écho, pour fournir un ensemble de coordonnées tridimensionnelles définissant la forme reconnue.

Les figures 5 et 6 représentent chacune, en trois dimensions, une succession d'échos 32 d'un même récepteur 2, dont l'amplitude A est portée en ordonnée et la distance $d$ en abscisse. Sur le troisième axe, en oblique sur les figures, est porté le rang temporel $r$ de chaque écho, toutes les périodes de scrutation T de 20 ms.

En d'autres termes, ces courbes ont été tracées en faisant s'écouler le temps $t$ pendant une période de scrutation T de 20 ms selon l'axe des distances $d$, pour tracer la courbe A = f (d) la plus "en avant", puis en répétant successivement l'opération pour les courbes A = f (d) postérieures s'échelonnant vers l'angle supérieur droit des figures.

Hormis un écho parasite constant pour les faibles distances $d$ (et retards), et éliminé du traitement, l'amplitude A = f (d) est nulle en l'absence d'usager. Lors du passage de celui-ci, le récepteur 2 ici considéré fournit un écho dont la distance $d$ fournit la grandeur de l'usager.

Dans le cas de la figure 5, il y a sensiblement, selon l'axe des rangs $r$, quatre fois moins de courbes A = f (d) perturbées que dans le cas de la figure 6, ce qui indique que l'usager est passé quatre fois plus vite que dans le cas de la figure 6.

Les figures 7 à 10 représentent schématiquement, en vue latérale, différentes formes caractéristiques à reconnaître, respectivement :

- figure 7 : un usager seul
- figure 8 : un usager portant un bébé dans les bras et
- les figures 9 et 10 représentent deux usagers adultes, respectivement rapprochés et en quinconce.

Les deux derniers cas correspondent à des tentatives de fraude.

Afin de détecter les tentatives de fraude, le microprocesseur 24 recherche si la, ou les, forme(s) reconnue(s) présente(nt) certaines caractéristiques.

Ainsi, et à titre d'exemple très élémentaire, la présence de deux têtes ou d'une forme de tête trop grosse permet de repérer les cas de fraude des figures 9, 10.

Pour des cas plus ambigus, le microprocesseur 24 compare les échos-types de la mémoire 25 à l'écho en cours d'analyse, pour déterminer l'écho-type qui y ressemble le plus.

Afin d'éliminer l'influence des échos parasites, l'unité 22 ne traite ici que les échos, relatifs aux ultrasons, émis à l'instant t0, qui sont reçus dans une fenêtre de télémétrie limitée par des retards déterminés par des instants tl et t2. Ces deux instants tl et t2 fixent deux limitations, haute et basse, du volume de contrôle 4, respectivement situées ici à 2 mètres et 0,5 mètre du sol et correspondant à deux distances, dl et d2, depuis le plan des cellules 3 (fig. 2).

En outre, afin de limiter la puissance de calcul nécessaire, le microprocesseur 24 détermine une vitesse de passage de l'usager à partir du déplacement de la forme reconnue par rapport aux récepteurs 2 qui la détectent, d'une période de scrutation de T à la suivante.

L'emplacement d'un volume futur occupé par l'usager, correspondant à un délai d'une période de scrutation T par rapport à l'instant actuel, est déterminé et seuls sont échantillonnés, ou validés, les récepteurs 2 dont le lobe 12 est dans le, ou à proximité du, volume futur qu'occupera l'usager à ce moment.

Ainsi, le microprocesseur 24 prédit de proche en proche la position future de l'usager correspondant à des lobes 12 de certains récepteurs 2 et il ne validera que ces récepteurs 2 lors de la scrutation suivante pour effectuer une poursuite électronique de l'usager.

Lorsque la forme reconnue ne comporte pas de caractéristiques associées à une tentative de fraude, et si le lecteur 6 a fourni au microprocesseur 24 un signal de validation du ticket, le microprocesseur 24 effectue, comme indiqué ci-dessus, une poursuite de la forme pour ouvrir le portillon 9 à l'instant voulu et le refermer dès que la totalité de la ou des formes reconnues l'a franchi. Il y a ainsi un double contrôle, par le lecteur 6 et par le microprocesseur 24. La barrière opto-électrique 91 permet de détecter que l'usager sort du volume de contrôle 4, avant de remettre l'équipement en veille.

En cas de détection d'une forme non acceptable, le microprocesseur 24 maintient fermé le portillon 9 et poursuit la forme jusqu'à sa sortie, en sens inverse de la flèche 10, avant de revenir en veille.

Dans d'autres applications, par exemple le contrôle d'animaux ou d'objets, la présence d'un lecteur de tickets serait alors inutile, la seule reconnaissance de la forme suffisant pour autoriser le passage ou simplement fournir une information à un opérateur.

On comprendra que la reconnaissance des formes étant effectuée à partir des échos 32 dans des lobes de réception relativement étroits et du retard tx associé à chaque écho, il aurait pu n'être prévu qu'un ou quelques émetteurs d'ultrasons, dont le ou les lobes remplissent sensiblement le volume de contrôle.

De même, les récepteurs auraient pu être disposés diversement dans l'espace, et non uniquement dans un plan, pour que leurs lobes, d'orientations diverses, constituent en quelque sorte un maillage tridimensionnel suffisamment serré, régulier ou non, du volume de contrôle, permettant d'échantillonner spatialement, avec la précision voulue, la forme à reconnaître.

On remarquera enfin que, en cas de pluralité d'émetteurs, chacun associé à un ou plusieurs récepteurs, les instants d'émission peuvent décalés d'un émetteur à l'autre, dans la mesure où ils sont connus.

**Revendications**

1. Equipement de reconnaissance tridimensionnelle de formes, comportant des moyens (1) d'émission d'ultrasons, pour émettre des ondes dans un volume de contrôle (4) dans lequel se trouvent les formes, des moyens (2) de réception d'ultrasons pour en recevoir des échos renvoyés par les formes et des moyens de traitement (21-26) des échos pour en déterminer les formes à reconnaître, les moyens de réception (2) comportant une pluralité de récepteurs élémentaires présentant des lobes de réception élémentaires (12) s'étendant selon une distribution prédéterminée dans le volume de contrôle (4) et la détermination des formes à reconnaître par lesdits moyens de traitement (21-26) s'effectuant par association des lobes de réception (12), et des instants de réception des échos qu'ils reçoivent, pour former des couples [lobe-écho], et par comparaison de ces couples, équipement caractérisé par le fait que les moyens d'émission (1) sont agencés pour émettre des impulsions de durée déterminée et les moyens de traitement (21-26) sont agencés pour mesurer les durées des échos reçus par les moyens de réception (2), en calculer un taux d'élargissement des échos par rapport aux impulsions émises et en déterminer une forme tridimensionnelle à reconnaître.

2. Equipement selon la revendication 1, dans lequel chaque récepteur (2) est associé à des moyens d'émission (1) dans une cellule à ultrasons (3).

3. Equipement selon l'une des revendications 1 et 2, dans lequel les moyens de traitement (21-26) sont agencés pour ne traiter que des échos, relatifs à des ultrasons émis à un instant donné, qui sont reçus dans une fenêtre de retards déterminée.

4. Equipement selon l'une des revendications 1 à 3, dans lequel les moyens de traitement (21-26) sont agencés pour comparer les formes reconnues à des formes prédéterminées et commander en conséquence des moyens (9) formant barrière d'accès à une zone à accès contrôlé.

5. Equipement selon la revendication 4, dans lequel il est prévu des moyens (6) de validation de titres d'accès, accessibles à des usagers se trouvant dans le volume de contrôle (4), pour commander les moyens (9) formant barrière en coopération avec les moyens de traitement (21-26).

6. Equipement selon l'une des revendications 4 et 5, dans lequel les récepteurs (2) sont disposés au-dessus du volume de contrôle (4) selon au moins une rangée et présentent des lobes de réception (12) dont la section présente un petit axe sensiblement parallèle à la rangée.

7. Equipement selon l'une des revendications 4 à 6, dans lequel les moyens de traitement (21-26) sont agencés pour déterminer de proche en proche une position future d'un usager correspondant à des lobes des récepteurs (2) et ne valider que les récepteurs (2) associés à ces lobes.

8. Equipement selon l'une des revendications 4 à 7, dans lequel les moyens de traitement (21-26) comportent une bibliothèque d'échos-types (25).

9. Equipement selon l'une des revendications 6 à 8, dans lequel les moyens de traitement (21-26) sont agencés pour régler la durée d'ouverture des moyens (9) formant barrière.

**Patentansprüche**

1. Vorrichtung zur dreidimensionalen Formenerkennung, aufweisend Mittel (1) zur Ultraschall-Emission zum Emittieren der Wellen in einem Kontrollvolumen (4), in welchem sich die Formen befinden, Mittel (2) zum Empfangen von Ultraschall, um damit Echos zu empfangen, die durch die Formen zurückgestrahlt werden und Mittel (21-26) zum Verarbeiten der Echos, um daraus die Formen zu bestimmen, die zu erkennen sind, wobei die Mittel zum Empfangen (2) eine Vielzahl von Elementarempfängern aufweisen, die Keulen (12) für den Elementarempfang aufweisen, die sich gemäß einer vorbestimmten Verteilung in dem Kontrollvolumen (4) erstrecken, und wobei die Bestimmung der durch die Verarbeitungsmittel (21-26) zu erkennenden Formen durch die Zuordnung der EmpfangsKeulen (12) und der Empfangszeitpunkte der Echos, die sie empfangen, um [Keulen-Echo]-Paare zu bilden, und durch Vergleich dieser Paare erfolgt, wobei die Vorrichtung

dadurch gekennzeichnet ist, dass
die Emissions-Mittel (1) angeordnet sind, um Impulse von bestimmter Dauer zu emittieren, und dass die Verarbeitungs-Mittel (21-26) angeordnet sind, um die Dauer der durch die Empfangs-Mittel (2) empfangenen Echos zu messen, um daraus einen Grad der Ausbreitung der Echos bezogen auf die emittierten Impulse zu berechnen und daraus eine dreidimensionale zu erkennende Form zu bestimmen.

2.  Vorrichtung nach Anspruch 1,
    wobei jeder Empfänger (2) zu Emissions-Mitteln (1) in einer Ultraschallzelle (3) zugeordnet ist.

3.  Vorrichtung nach Anspruch 1 oder 2,
    wobei die Verarbeitungsmittel (21-26) angeordnet sind, um nur die Echos zu verarbeiten, die sich auf in einem gegebenen Zeitpunkt emittierten Ultraschall beziehen, die in einem bestimmten Verzögerungsfenster empfangen werden.

4.  Vorrichtung nach einem der Ansprüche 3,
    wobei die Verarbeitungsmittel (21-26) angeordnet sind, um die erkannten Formen mit vorbestimmten Formen zu vergleichen und als Folge daraus Mittel (9) zu steuern, die eine Zugriffssperre zu einer Zone kontrollierten Zugriffs bilden.

5.  Vorrichtung nach Anspruch 4,
    wobei aus Gründen des Zugriffs Mittel (6) zur Validierung vorgesehen sind, die für Benutzer zugänglich sind, die sich in dem Kontrollvolumen (4) befinden, um die Mittel (9) zu steuern, die im Zusammenwirken mit den Verarbeitungsmitteln (21-26) eine Sperre bilden.

6.  Vorrichtung nach Anspruch 4 oder 5,
    wobei die Empfänger (2) oberhalb des Kontrollvolumens (4) in mindestens einer Reihe angeordnet sind und Empfangskeulen (12) aufweisen, deren Querschnitt eine kleine Achse aufweist, die im wesentlich parallel zu der Reihe verläuft.

7.  Vorrichtung nach einem der Ansprüche 4 bis 6,
    wobei die Verarbeitungsmittel (21-26) angeordnet sind, um schrittweise eine zukünftige Position eines Benutzers zu bestimmen, der Keulen der Empfänger (2) entspricht und um nur die Empfänger (2) zu validieren, die diesen Keulen zugeordnet sind.

8.  Vorrichtung nach einem der Ansprüche 4 bis 7,
    wobei die Verarbeitungsmittel (21-26) eine Bibliothek von Echo-Typen (25) aufweisen.

9.  Vorrichtung nach einem der Ansprüche 6 bis 8,
    wobei die Verarbeitungsmittel (21-26) angeordnet sind, um die Öffnungsdauer der Mittel (9) zu regeln, die eine Sperre bilden.

## Claims

1.  Apparatus for three-dimensional recognition of shapes, comprising means (1) of emitting ultrasound, to emit waves in a control space (4) in which the shapes are located, means (2) of receiving ultrasound to receive in it echoes sent back by the shapes, and means of processing (21-26) echoes to determine from them the shapes to be recognised, the receiving means (2) comprising a plurality of basic receivers which have basie reception lobes (12) extending according to a pre-determined distribution in the control space (4) and the determination of the shapes to be recognised by said processing means (21-26) being made by association of the reception lobes (12) and reception times for the echoes which they receive to form pairs [lobe-echo], and by comparison of these pairs, apparatus characterised by the fact that the emission means (1) are arranged to emit pulses of specific duration and the processing means (21-26) are arranged to measure the lengths of the echoes received by the receiving means (2), calculate from them a rate of enlargement of the echoes in relation to the pulses to the pulses emitted and determine from them a three-dimensional shape to be recognised.

2.  Apparatus according to claim 1, wherein each receiver (2) is associated with emission means (1) in an ultrasound cell (3).

3.  Apparatus according to one of claims 1 and 2, wherein the processing means (21-26) are arranged to process only echoes, relating to ultrasound emitted at a given moment, which are received in a specific delay window.

4.  Apparatus according to one of claims 1 to 3, wherein the processing means (21-26) are arranged to compare the recognised shapes with pre-determined shapes and consequently to control means (9) which form an access barrier to a controlled-access zone.

5.  Apparatus according to claim 4, wherein means (6) are provided for validating access rights, accessible to users located in the control space (4), to control the means (9) which form a barrier, in co-operation with the processing means (21-26).

6.  Apparatus according to one of claims 4 and 5, wherein the receivers (2) are disposed above a control space (4) in at least one row and have reception lobes (12), the cross-section of which has a small axis substantially parallel to the row.

7.  Apparatus according to one of claims 4 to 6, wherein the processing means (21-26) are arranged to determine step by step a future position of a user corresponding to lobes of the receivers (2) and to validate only the receivers (2) associated with these lobes.

8.  Apparatus according to one of claims 4 to 7, wherein the processing means (21-26) include a library of echo types (25).

9.  Apparatus according to one of claims 6 to 8, wherein the processing means (21-26) are arranged to regulate the length of opening of the means (9) which form a barrier.

EP 0 706 062 B1

FIG.1

FIG.2

FIG.3

FIG.4

FIG.7

FIG.8

FIG.9

FIG.10

FIG.5

FIG.6